# EUROPEAN PATENT APPLICATION

(11) **EP 1 577 062 A1**
(43) Date of publication of application: **21.09.2005**
(21) Application number: 05005393.3
(22) Date of filing: 11.03.2005
(51) Int. Cl.: B25J 9/10

(54) **Industrial robot with speed reducer in rotary joints**

(30) Priority: 16.03.2004 JP 2004074573
(71) Applicant: FANUC LTD, Yamanashi 401-0597 (JP)
(72) Inventor: Nihei, Ryo, Fujiyoshida-shi Yamanashi 403-0005 (JP); Okada, Takeshi FANUC Manshonharimomi, Minamitsuru-gun Yamanashi 401-0511 (JP); Shimada, Naoki FANUC Manshonharimomi, Minamitsuru-gun Yamanashi 401-0511 (JP)
(74) Representative: Schmidt, Steffen J.

(57) **Abstract**

A joint structure is employed for an articulated type robot in which a speed reducer of one-stage speed reducing structure and a servo motor are directly connected to each other for the joint of the rotary base (B1) and and the lower arm (A1) and for the joint of the lower arm (A1) and the upper arm (A2). The input shaft (2) of the speed reducer (10) directly connected to the output shaft of the servo motor (1) attached to the first member (8) (B1/A2) is a crank shaft composing a cam, and the external gears (3a,3b,3c) are meshed with the cam surfaces. When the servo motor (1) is driven and the input shaft (2) is rotated, the external gears (3a,3b,3c) are eccentrically revolved and rotated while the external gears (3a,3b,3c) are meshed with the internal gear (4) provided inside the case (5) of the speed reducer (10). The rotation is taken out by a plurality of pin members (6) engaged to the external gears (3a,3b,3c) and transmitted to the output shaft (7) of the speed reducer (10). Therefore, the second member (9) (A1) is relatively pivoted with respect to the first member (8). Due to the foregoing, the robot structure in which a plurality of joint devices for connecting the adjoining links via the speed reducer are connected in series to each other can be simplified.

## Description

### BACKGROUND OF THE INVENTION

### 1. Field of the Invention

The present invention relates to an industrial robot. More particularly, the present invention relates to an industrial robot having an arm structure using a rotary joint mechanism to rotate adjoining links, by a servo motor, via a speed reducing mechanism of a speed reducer.

### 2. Description of the Related Art

In general, a joint structure of an industrial robot is provided with a speed reducer. As the reduction ratio of the speed reducer is high, a speed reducer, such as Cyclo Speed Reducer (registered trade mark) or RV Speed Reducer (registered trade mark), in which an eccentric rotation type planetary differential reduction gear mechanism is employed, is widely used. For example, the mechanism eccentric rotation type planetary differential reduction gear speed reducer referred to as a Cyclo Speed Reducer (registered trade mark) includes: an eccentric body shaft which is also the input shaft of the speed reducer; an external gear attached to the eccentric body shaft via a bearing to allow eccentric rotation; an internal gear inner meshed with the external gear; a roller hole formed in the external gear; a pin loosely fit in the roller hole; and an output shaft fixed to the pin in such a manner that only the rotation component of the external gear is transmitted via the pin. The above joint structure is also applied to an articulated type robot. In this articulated type robot, multiple joint devices (bodies in which links are connected with each other), in which arms are connected with each other via a speed reducer, are connected in series with each other, so that a simple structure is realized.

However, if the joint structure, in which the eccentric rotation type planetary differential reduction gear speed reducer is used, is applied to a robot, especially to the aforementioned articulated type robot, vibration is caused by the eccentric motion of the planetary gear. Accordingly, the operation of the robot tends to include the vibration. In order to solve the above problems, the following method is commonly used. It is conventional that a gear speed reducing section is provided in the primary stage of the eccentric rotation type planetary differential reduction gear speed reducer, so that the vibration frequency of the speed reducer which causes resonance vibration between the speed reducer and the robot, can be excluded from the normal controlling speed range of the motor.

For example, Japanese Examined Patent Publication No. 8-22516 discloses an example in which this type of speed reducer is used. The speed reducer disclosed in Japanese Examined Patent Publication No. 8-22516 is composed of a primary stage speed reducer of a parallel shaft type gear device and a secondary stage speed reducer. The secondary stage speed reducer includes: an internal gear fixed to a case or the like; an external gear meshed with the internal gear; and a crank shaft as a cam shaft meshed with the external gear to eccentrically rotate the external gear. In this structure, the generation of vibration is prevented by setting a reduction ratio of the primary stage speed reducer in such a manner that vibration cannot be generated by the eccentric rotation motion of the secondary stage speed reducer in the normal controlling speed range of the motor.

However, the above speed reducer has a two-stage speed reducing structure composed of a primary speed reducing section and a secondary speed reducing section. Therefore, the structure of the speed reducer becomes complicated, which results to increased manufacturing costs. Especially, in the case of the articulated type robot, multiple joints using this two-stage speed reducing type speed reducer are connected in series to each other. Therefore, the manufacturing cost of the speed reducer occupies a large portion of the manufacturing cost of the entire robot. Accordingly, it is difficult for the manufacturing cost of the entire robot to be reduced because the manufacturing cost of the speed reducer is high.

The object of this invention is to easily reduce the manufacturing cost of the entire robot by simplifying "the structure in which multiple joints using a speed reducer are connected in series to each other" in the industrial robot.

### SUMMARY OF THE INVENTION

The present invention provides an inexpensive articulated type industrial robot of a simple structure in which multiple joint devices are connected in series to each other, wherein a speed reducer having one-stage speed reducing structure, the speed reducing mechanism of which is composed of only a planetary gear speed reducing mechanism, is employed in the joint device, arms are pivotably connected to each other via the speed reducer and an input shaft of the speed reducer is directly connected to a servo motor.

In order to solve the above problems, the present invention provides an industrial robot having an arm structure, in which, when adjoining links are relatively pivotably connected to each other via a speed reducer driven by a servo motor, a one-stage speed reducing type speed reducer having only an eccentric rotation type planetary differential reduction gear mechanism as a speed reducing mechanism is employed, the rotary joint mechanisms, the number of which is greater than or equal to N (N is a positive integer greater than or equal to 2.), are arranged in series so as to connect the links, the number of which is N + 1.

More specifically, the present invention provides an industrial robot comprising an arm structure, the arm structure including a speed reducer for relatively pivotably connecting adjoining links to each other and also including a servo motor for driving the speed reducer so as to pivot the adjoining links, wherein the links, the number of which is N + 1, are connected in series to each other by the rotary joint mechanisms, the number of which is N (N ≥ 2), a speed reduction mechanism of the speed reducer is composed of only a one-stage speed reduction type eccentric rotation type planetary differential reduction gear mechanism, a casing of the speed reducer is fixed to one of the adjoining links, the other of the links is fixed to an output shaft of the speed reducer, an output shaft of the servo motor and a rotary shaft of the rotary joint mechanism provided with the servo motor are aligned on the same axis, and an output shaft of the servo motor is connected to an input shaft of the speed reducer so as to transmit a drive force.

In this connection, it can be considered that vibration tends to occur in the case where the eccentric rotation type planetary differential reduction gear speed reduction mechanism of a one-stage speed reduction type is employed. However, when conventional methods for suppressing the generation of vibration are appropriately used being combined with each other, such vibration can be suppressed. Such methods for suppressing the generation of vibration are described in the following items (1) to (3).
(1) To improve the machining accuracy of parts of the speed reducer.
(2) To control the speed of the motor so as to cancel the generated vibration.
(3) To exclude the vibration frequency of the speed reducer, at which causes resonance vibration between the speed reducer and the robot, from the normal controlling speed range of the motor by decreasing the speed reduction ratio of the speed reducer and by using a high torque and low rotary speed type motor.

According to the present invention, it is possible to simplify the structure in which multiple joint devices (bodies in which links are combined with each other) of an industrial robot, the arms of which are connected to each other via a speed reducer, are connected in series to each other. According to the present invention, for example, it becomes possible to provide an articulated type robots at a low manufacturing cost.

These and other objects, features and advantages of the present invention will be more apparent in light of the detailed description of exemplary embodiments thereof as illustrated by the drawings.

### BRIEF DESCRIPTION OF THE DRAWINGS

In the drawings:
Fig. 1 is a perspective view exemplarily showing the appearance of a robot to which the present invention is applied; and
Fig. 2 is a sectional view showing a joint structure in an embodiment of the present invention.

### DETAILED DESCRIPTION

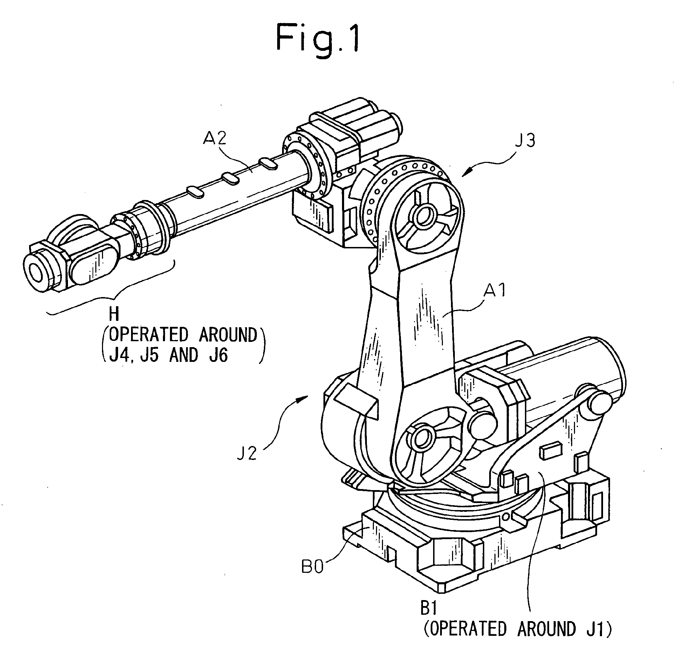

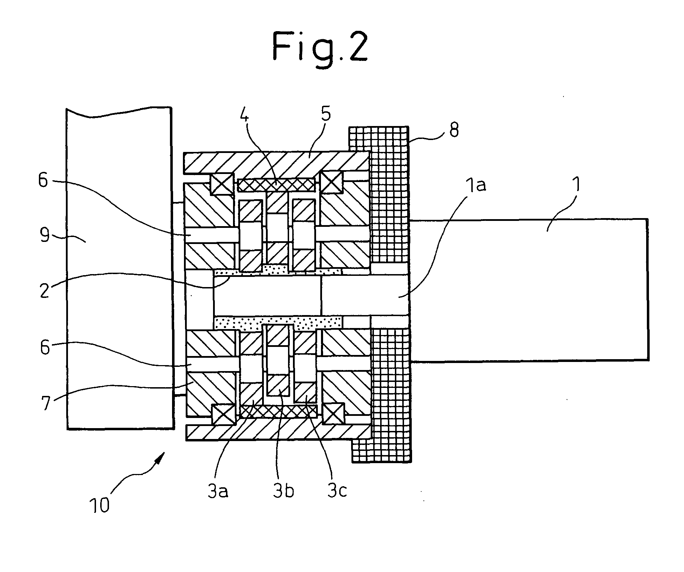

Referring to Figs 1 and 2, an embodiment of the present invention will be explained below. First of all, referring to Fig. 1, the appearance of a robot to which the present invention is applied is exemplarily shown in the perspective view. As shown in this drawing, the robot is an articulated type robot of six axes including: a base B0; a rotary base B1 operated around axis J1; a lower arm A1 operated around axis J2; an upper arm A2 operated around axis J3; and a wrist unit H operated around the three axes (J4 to J6) of the wrist unit so that the wrist unit H can be moved with a three-degrees-of-freedom. In this embodiment, the joint structure of the present invention is applied to the link combinations of the robot rotary base B1, the lower arm A1 and the upper arm A2.

Needless to say, "the two adjoining links" included in these three links are "the rotary base B1 and the lower arm A1" and "the lower arm A1 and the upper arm A2", and the joint for relatively rotating the rotary base B1 and the lower arm A1 is axis J2, and the joint for relatively rotating the lower arm A1 and the upper arm A2 is axis J3. The joint structure of the respective axis J2 and the axis J3 is composed in such a manner that the adjoining links (the rotary base B1 and the lower arm A1, or the lower arm A1 and the upper arm A2) are connected to each other via the speed reducer and that the servo motor is directly connected to the speed reducer. The axis J2 and the axis J3 are connected in series to each other via the lower arm A1. That is, one joint device explained below is used in each of the axis J2 and the axis J3. The two joints can be connected in series to each other, while the second link (the lower arm A1 in this case) in the three links is interposed.

Referring to Fig. 2 showing the sectional structure, the joint device used for the axis J2 and the axis J3 will be explained as follows. In this connection, in the related explanations of Fig. 2, "the first member" and "the second member" have the following meanings in the joint device used for the axis J2.

The first member is a member constituting at least one portion of the rotary base B1.

The second member is a member constituting at least one portion of the lower arm A1.

In the joint device used for the axis J3, "the first member" and "the second member" have the following meanings.

The first member is a member constituting at least one portion of the upper arm A2.

The second member is a member constituting at least one portion of the lower arm A1.

In the joint device used for the axis J2, the servo motor is a drive source for driving the axis J2. In the joint device used for the axis J3, the servo motor is a drive source for driving the axis J3.

As drawn in Fig. 2, the servo motor 1 is attached to the first member 8, and the output shaft 1a of the servo motor 1 is directly connected to the input shaft 2 of the speed reducer, the entire body of which is shown by the reference numeral 10. The input shaft 2 of the speed reducer is a crank shaft composing a cam, and the three external gears 3a, 3b, 3c are meshed with the respective cam faces. The case 5 of the speed reducer 10 is attached to the first member 8. Inside the case 5, the internal gear 4 meshed with each external gear 3a, 3b, 3c is provided. Further, multiple pin members 6 are engaged with the external gears 3a, 3b, 3c, and the pin member 6 is connected to the output shaft 7 of the speed reducer 10. This output shaft 7 is attached to the second member 9 and pivotally supported by the case 5 of the speed reducer 10 while the output shaft 7 and the input shaft 2 are aligned on the same axis.

In the joint device having the structure described above, when the servo motor 1 is driven, the input shaft 2 of the speed reducer 10 directly connected to the output shaft 1a of the servo motor 1 is rotated. Then, the external gears 3a, 3b, 3c meshed with the crank shaft portion (cam) of the input shaft 2 are eccentrically rotated. While the external gears 3a, 3b, 3c are meshed with the internal gear 4 provided inside the case 5 of the speed reducer 10, the external gears 3a, 3b, 3c conduct a revolving motion and a rotating motion at the same time. Where the number of teeth of the external gears 3a, 3b, 3c is n₁ and the number of teeth of the internal gear 4 is n₂. the external gears 3a, 3b, 3c are rotated by (n₂ - n₁)/n₂ rotation, during the one revolution of the external gears 3a, 3b, 3c. This rotating motion is taken out by a plurality of pin members 6, which are engaged to the external gears 3a, 3b, 3c, to transmit it to the output shaft 7 of the speed reducer 10. As a result, the second member 9 is relatively pivoted with respect to the first member 8. In this case, the speed reduction ratio (the rotational speed ratio) is (n₂ - n₁)/n₂.

As described above, the speed reducer 10 to connect the adjoining links conducts a speed reduction of one-stage of the eccentric rotation type planetary differential reduction gear mechanism. Compared with the speed reducer described above in which the two-stage speed reducing structure is employed, the structure of the speed reducer 10 is very simple. Further, as the servo motor is directly connected to the input shaft of the speed reducer, the structure of the joint mechanism can be advantageously simplified. When multiple devices described above are continuously connected in series to each other, it is possible to achieve a robot, the degree-of-freedom of which is high, having a structure which is simple. In the above embodiment, explanations are made into a case of N = 2 in which three links are connected by two joint devices. However, as necessary, it is possible to apply the present invention to a case of N = 3 or more.

Although the invention has been shown and described with exemplary embodiments thereof, it should be understood by those skilled in the art that the foregoing and various other changes, omissions and additions may be made therein and thereto without departing from the spirit and the scope of the invention.

## Claims

1. An industrial robot including an arm structure in which links, the number of which is N + 1, are connected in series to each other by rotary joint mechanisms, the number of which is N (N is a positive integer greater than or equal to 2.), **characterized in that**
the rotary joint mechanisms, the number of which is N, include: a speed reducer (10) for relatively pivotally connecting the adjoining links (B1, A1; A1, A2) to each other; and a servo motor (1) for driving the speed reducer (10) so as to rotate the adjoining links,
a speed reduction mechanism of the speed reducer (10) is composed of only a one-stage speed reduction type eccentric rotation type planetary differential reduction gear mechanism (3a, 3b, 3c, 4),
a casing (5) of the speed reducer (10) is fixed to one of the adjoining links (B1, A1; A1, A2), the other of the adjoining links (B1, A1, ; A1, A2) is fixed to an output shaft (7) of the speed reducer (10),
an output shaft (1a) of the servo motor (1) and a rotary shaft of the rotary joint mechanism provided with the servo motor (1) are arranged on the same straight line, and
the output shaft (1a) of the servo motor (1) is connected to an input shaft (2) of the speed reducer (10) so as to transmit a drive force.
